# EUROPÄISCHE PATENTSCHRIFT

(11) **EP 1 634 483 B1**
(45) Veröffentlichungstag und Bekanntmachung des Hinweises auf die Patenterteilung: **06.04.2011**
(21) Anmeldenummer: 04739219.6
(22) Anmeldetag: 15.05.2004
(51) Int. Cl.: H05B 3/34, G05D 23/19

(54) **SCHMIEGSAMES ELEKTRISCHES WARMEGERAT**
FLEXIBLE ELECTRICAL HEATING UNIT
APPAREIL DE CHAUFFAGE ELECTRIQUE FLEXIBLE

(30) Priorität: 03.06.2003 DE 10324941
(43) Veröffentlichungstag der Anmeldung: 15.03.2006
(73) Patentinhaber: Beurer GmbH, 89077 Ulm (DE)
(72) Erfinder: MERK, Ernst, 89264 Weissenhorn (DE)
(74) Vertreter: Fleck, Hermann-Josef
(86) Internationale Anmeldenummer: PCT/EP2004/005244
(87) Internationale Veröffentlichungsnummer: WO 2004/107814

(56) Entgegenhaltungen:
- EP-A- 0 320 157
- DE-A- 2 915 797
- DE-A- 4 141 224
- US-A- 4 549 074
- US-A- 4 658 119
- US-A- 4 897 527

## Beschreibung

Die Erfindung bezieht sich auf ein schmiegsames elektrisches Wärmegerät mit einer einen schmiegsamen Träger und eine darin eingelegte Heizkordel aufweisenden Wärmevorrichtung, mindestens einem in zumindest einem Heizkreis angeordneten Steuerglied für einen Heizstrom und einer auf dieses wirkenden Ansteuerschaltung, wobei die Ansteuerschaltung eine Zeitsteuerschaltung aufweist, mittels deren zum Erzeugen einer erhöhten Anfangstemperatur an der Oberfläche des Trägers während einer vorgegebenen Anfangszeitdauer eine gegenüber einer nachfolgenden, durch einen Sollwert bestimmten Dauerbetriebsphase erhöhte Heizleistung steuerbar oder regelbar ist, während in der Dauerbetriebsphase eine Heizleistung zum Bewirken einer niedrigeren Oberflächentemperatur des Trägers als die Anfangstemperatur einregelbar ist oder nach der Anfangszeitdauer eine Abschaltung des Heizstroms erfolgt.

Ein derartiges schmiegsames elektrisches Wärmegerät mit einer einen schmiegsamen Träger und eine darin eingelegte Heizkordel aufweisenden Wärmevorrichtung ist in der EP 0 320 157 A1 angegeben. Bei diesem bekannten Wärmegerät weist die Ansteuerschaltung eine Zeitsteuerschaltung für einen 24-Stunden-Zyklus auf, mit der in einer vorgegebenen Anfangsphase eine gegenüber einer nachfolgenden Dauerbetriebsphase erhöhte Anfangstemperatur steuerbar ist, wodurch eine Vorheizung mit schneller Aufwärmung erreicht werden soll. Dabei ist die Steuerung so ausgelegt, dass für die Anfangstemperatur höchstens die höchste wählbare Temperaturstufe, die auch im Dauerbetrieb eingestellt werden kann, eingestellt wird.

Ein weiteres schmiegsames elektrisches Wärmegerät ist in der DE 33 36 854 C2 angegeben. Hierbei soll eine für einen Dauerbetrieb vorgesehene Temperatur möglichst schnell erreicht werden, indem in einer Anfangsphase ein erhöhter Temperaturführungswert vorgegeben wird. Der Temperaturführungswert wird anschließend in einer Übergangsphase kontinuierlich oder in Stufen derart abgesenkt, dass an der Oberfläche kein Temperaturabfall auftritt. Die Dauerbetriebstemperatur wird nicht überschritten. Ein Wärmegerät mit ähnlicher Ansteuerschaltung zum schnellen Erreichen der gewünschten Oberflächentemperatur für einen Dauerbetrieb ist auch in der DE 41 41 224 C2 offenbart.

Ein weiteres schmiegsames elektrisches Wärmegerät, das beispielsweise als Heizkissen ausgebildet ist, ist in der DE 44 80 580 C2 gezeigt. Die Heizleiter einer Heizkordel werden von einem mittels mindestens eines Steuerglieds in Form eines Triacs gesteuerten Heizstrom durchflossen. Die Ansteuerschaltung für das Steuerglied weist einen Mikroprozessor sowie auch eine Timerschaltung auf, die dazu dient, die Taktfrequenz, mit der ein Programm des Mikrocontrollers arbeitet, zu steuern, und die als Watchdog-Timer aufgebaut ist, um den Betrieb des Mikroprozessors Wiederholt für eine zwischen 0,01 und 3 sec. einstellbare Zeitspanne zu stoppen und erneut zu initialisieren. Ferner weist dieses bekannte Wärmegerät eine Sicherheits-Steuerschaltung sowie Anzeigelampen auf. In einem Steuerprogramm ist auch eine Fehlersicherheitsroutine mit Fehlerzählern implementiert. Die Fehlerüberwachung ist dabei relativ aufwändig gestaltet.

In der (nicht vorveröffentlichten) DE 102 11 142 A1 ist ein weiteres schmiegsames elektrisches Wärmegerät der vorstehend genannten Art angegeben, bei dem ebenfalls verschiedene Sicherheitsvorkehrungen getroffen sind und auch eine Zeitsteuerschaltung zum Abschalten der Wärmevorrichtung vorgesehen ist, wobei Abschaltzeiten fest oder separat schaltbar integriert sein können. Bei längerem Betrieb kann auch eine Temperaturabsenkung durch entsprechende Programmierung einer digitalen Schaltungsanordnung erfolgen, um Hautverbrennungen durch dauernd hohe Oberflächentemperaturen der Wärmevorrichtung zu vermeiden. Hierzu kann ab einer bestimmten Sollwert-Temperatur eine zeitabhängige Sollwertabstufung oder auch Abschaltung der Heizung vorgesehen sein. Nähere Angaben, in welchen Betriebsphasen entsprechende Steuerungen der Heizleistung vorgenommen werden, sind dabei nicht gemacht.

Der Erfindung liegt die Aufgabe zugrunde, ein schmiegsames elektrisches Wärmegerät der eingangs genannten Art bereit zu stellen, mit dem für einen Benutzer auf einfache Weise Wärmeverläufe an der Oberfläche des Heizkörpers bzw. Trägers mit höherem Komfort einstellbar sind, wobei die Zeitsteuerschaltung gleichzeitig zum Einhalten von Sicherheitskriterien genutzt werden kann.

Diese Aufgabe wird mit den Merkmalen des Anspruches 1 gelöst. Hiernach ist vorgesehen, dass die Ansteuerschaltung eine Zeitsteuerschaltung aufweist, mittels deren zum Erzeugen einer erhöhten Anfangstemperatur an der Oberfläche des Trägers während einer vorgegebenen Anfangszeitdauer eine gegenüber einer nachfolgenden Dauerbetriebsphase erhöhte Heizleistung steuerbar oder regelbar ist, während in der Dauerbetriebsphase höchstens eine auch für einen unbeaufsichtigten Betrieb zugelassene Heizleistung zum Bewirken einer niedrigeren Oberflächentemperatur des Trägers als die Anfangstemperatur eingeregelt wird oder nach der Anfangszeitdauer eine Abschaltung erfolgt.

Wird von einem Benutzer beispielsweise eine relativ hohe Wärmestufe für eine entsprechend hohe Oberflächentemperatur gewählt, wird dies von der Steuerschaltung erkannt und mittels der Zeitsteuerschaltung wird anfänglich eine relativ hohe Heizleistung freigegeben, jedoch nur für ein hinsichtlich Sicherheitsanforderungen für das Wärmegerät und die Temperaturverträglichkeit eines Benutzers akzeptables Niveau, um z.B. Gesundheitsgefährdungen zu vermeiden. Ist das anfängliche Wärmebedürfnis des Benutzers im Wesentlichen gedeckt, wird die Heizleistung auf ein für einen andauernden Wärmebetrieb zulässiges Maß gedrosselt. Alternativ kann nach der Anfangszeitdauer auch eine vollständige Abschaltung der Heizleistung erfolgen, falls ein Benutzer dies von vornherein wünscht und ein gegebenenfalls vorgesehenes entsprechendes Programm wählt.

Dabei ergibt sich eine vorteilhafte Steuerungs- oder Regelungsmöglichkeit der Heizleistung durch die Ausbildung der Ansteuerschaltung in der Weise, dass die Höhe und/oder Dauer der erhöhten Heizleistung in der Anfangsphase in Abhängigkeit von einer manuell für die Dauerbetriebsphase gewählten Heizleistung gesteuert oder geregelt wird, wobei sich dann die gewünschte Temperaturstufe auf den Dauerbetrieb bezieht und der Verlauf der Heizleistung in der Anfangsphase in Abhängigkeit davon auf ein angemessenes Maß eingeregelt wird. Beispielsweise ist es günstig, relativ schnell ein angemessenes Temperaturniveau durch entsprechend hohen, zulässigen Heizstrom in einer an-fänglichen Phase der Anfangszeitdauer zu erreichen, dann während der weiteren Anfangszeitdauer auf gleichem Niveau zu halten oder langsam kontinuierlich oder in Stufen abfallen zu lassen, um gegen Ende der Anfangszeitdauer von z.B. 60 oder 90 Minuten auf das Heizleistungsniveau der Dauerbetriebsphase überzugehen oder eine vollständige Abschaltung vorzunehmen.

Ein vorteilhafter Aufbau besteht darin, dass die Zeitsteuerschaltung mit einem Ausgangssignal auf eine in der Ansteuerschaltung angeordnete Leistungsstellerschaltung einwirkt, mit der das Steuerglied ansteuerbar ist.

Um insbesondere auch in der Anfangsphase einen von einem Dauerbetrieb abweichenden Temperaturverlauf zu erzielen, ist vorteilhaft vorgesehen, dass das Ausgangssignal der Zeitsteuerschaltung über eine Sollwertbeaufschlagung einem Sollwert überlagerbar ist.

Eine für den Aufbau und die Funktion weitere günstige Ausgestaltung besteht darin, dass die Ansteuerschaltung eine Isolationsüberwachungsstufe für eine zwischen in der Heizkordel befindlichen Heizdrähten liegende Isolation, eine Gehäuseinnentemperaturüberwachungsstufe oder eine Begrenzerstufe oder eine Kombination mindestens zweier dieser Stufen aufweist und dass die unter Einfluss der Zeitsteuerschaltung bewirkte Höhe und/oder Dauer der erzeugten Heizleistung bei einem durch mindestens eine der Stufen festgestellten fehlerhaften Zustand begrenzt oder die Heizleistung vollständig abgeschaltet wird.

Eine weitere vorteilhafte Ausgestaltung ergibt sich durch die Maßnahmen, dass in dem Heizkreis ein weiteres von der Ansteuerschaltung ansteuerbares Steuerglied angeordnet ist, das bei einem fehlerhaften Zustand zum Begrenzen, Herabsetzen oder Unterbinden des Heizstromes angesteuert wird, wobei eine zweckmäßige Ausbildung darin besteht, dass zumindest ein Ausgangssignal der Stufen zum Ansteuern des weiteren Steuergliedes herangezogen ist.

Der Aufbau und die Funktion werden weiterhin dadurch begünstigt, dass das oder ein weiteres Ausgangssignal der Zeitsteuerschaltung mindestens einer Stufe zugeführt wird und dass die mindestens eine Stufe in der Weise ausgebildet ist, dass sie wie bei einem anormalen Zustand auf das Steuerglied und/oder das weitere Steuerglied zum Begrenzen, Herabsetzen oder Unterbrechen des Heizstromes wirkt, oder dass das oder das weitere Ausgangssignal unmittelbar an das weitere Steuerglied zum Begrenzen, Herabsetzen oder Unterbrechen des Heizstromes angelegt wird.

Für einen vereinfachten Aufbau sind umgekehrt auch die Maßnahmen vorteilhaft, dass mindestens eine Stufe mit einem Ausgang an einen Eingang der Zeitsteuerschaltung angeschlossen ist und dass die Zeitsteuerschaltung auf einen Empfang eines Ausgangssignals der Stufe ihrerseits ein Ausgangssignal zum Begrenzen, Herabsetzen oder Unterbrechen des Heizstroms abgibt.

Eine zuverlässige Funktion kann des Weiteren dadurch erreicht werden, dass die Zeitsteuerschaltung in elektrische Wirkverbindung mit einem Schalter der Energieversorgung des Wärmegerätes, der Ansteuerschaltung oder einer Komponente derselben oder unmittelbar mit dem weiteren Steuerglied zum Abschalten der elektrischen Versorgungsspannung gebracht ist.

Günstige Einstell- und Steuerungsmöglichkeiten werden ferner dadurch erreicht, dass Verläufe der Heizleistung zum Beeinflussen der Oberflächentemperatur hinsichtlich Höhe und/oder Dauer in Abhängigkeit von einer manuell gewählten Leistungsstufe oder Anwendungsbetriebsart in einem Speicher abgelegt und zum Steuern und Einregeln der Heizleistung aufrufbar sind. Die verschiedenen, für eine gewünschte Wärmestufe oder eine gewünschte Wärmebetriebsart zweckmäßigen Verläufe der Heizleistung können dabei insbesondere in einem Mikroprozessor oder Mikrocomputer bzw. Mikrocontroller oder ASIC programmiert und auch umprogrammiert bzw. angepasst werden. Hierbei kann auch verschiedenen Ausführungen des Wärmegerätes, wie z.B. Wärmekissen, Wärmedecke oder Wärmeunterbett relativ einfach Rechnung getragen werden.

Eine weitere verfeinerte Steuerungsmöglichkeit ergibt sich dabei dadurch, dass in dem Speicher in Verbindung mit einer Leistungsstufenumschaltung während einer Betriebsphase weitere Verläufe gespeichert und auf die Umschaltung hin aufrufbar sind.

Um einen Benutzer genauer über Gerätezustände zu informieren, sind des Weiteren die Maßnahmen vorteilhaft, dass die Zeitsteuerschaltung mit einer Anzeigevorrichtung für Zustände der Zeitsteuerschaltung und/oder Gerätefunktionen in Verbindung steht.

Eine zusätzliche Sicherheit für den Betrieb des Wärmegerätes wird dadurch erhalten, dass in einem zu einem das mindestens eine Steuerglied aufweisenden Steuerzweig des Heizkreises parallel liegenden Parallelzweig eine übergeordnete Sicherheitsabschaltung zum Abschalten des Wärmegerätes bei einem Gefährdungszustand vorgesehen ist.

Zu einer sicheren Funktion trägt die Maßnahme bei, dass die Heizkordel in der Weise aufgebaut ist, dass bei Übertemperatur eine Sicherheitsabschaltung stattfindet. Hierbei kann die Ausbildung vorteilhaft so sein, dass die Abschaltung bei lokaler Übertemperatur (Hot Spot) ausgelöst wird. Die Grundfunktion kann durch eine Art Stromsicherung und/oder Temperatursicherung erreicht werden. Die Ansprech- bzw. Auslösetemperatur liegt dabei bei schmiegsamen Wärmegeräten vorzugsweise etwa im Bereich zwischen 110° C und 160° C, bei besonderen schmiegsamen Wärmegeräten kann auch eine andere Ansprechtemperatur geeignet sein.

Die Erfindung wird nachfolgend anhand von Ausführungsbeispielen unter Bezugnahme auf die Zeichnungen näher erläutert. Es zeigen:
- Fig. 1: eine schematische Blockdarstellung eines ersten Ausführungsbei- spiels eines Wärmegerätes,
- Fig. 2 bis 4: weitere Ausführungsbeispiele des Wärmegerätes in Blockdarstellung und
- Fig. 5: ein Beispiel für zwei verschiedene Temperaturverläufe.

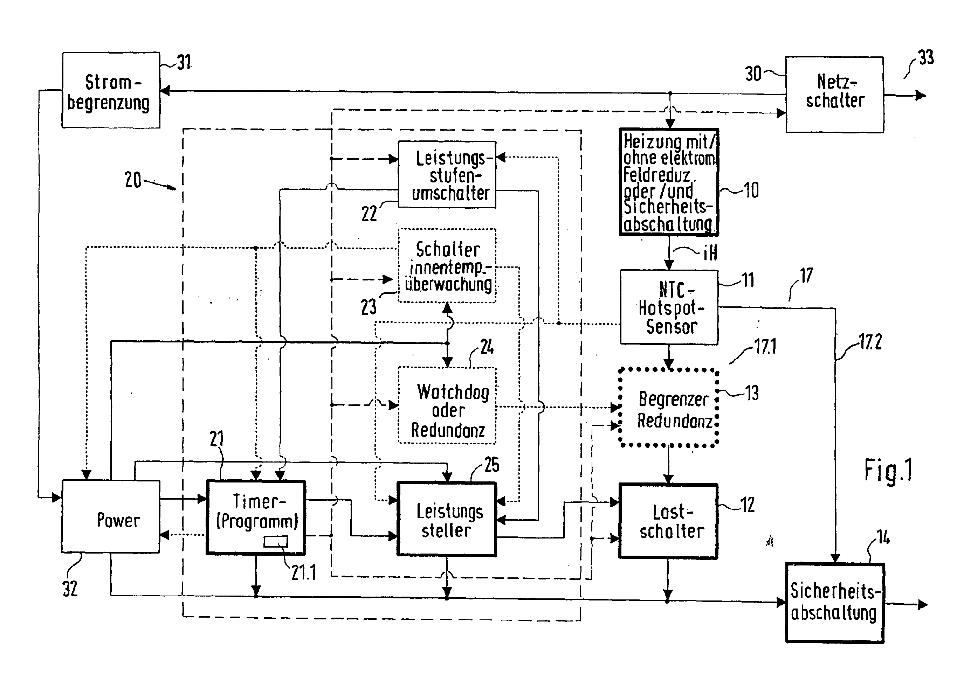

Ein in Fig. 1 dargestelltes elektrisches Wärmegerät weist eine in einem Heizkreis 17 angeordnete schmiegsame Wärmevorrichtung 10 mit einem schmiegsamen Heizkörper bzw. Träger mit einer darin angeordneten Heizkordel und eine Ansteuerschaltung 20 zum Steuern oder Regeln eines in dem Heizkreis 17 fließenden Heizstroms iH auf. Über einen Netzschalter 30 ist das Wärmegerät an eine Hauptversorgung 33, beispiels-weise das Stromnetz anschließbar, wobei der Versorgungsstrom mittels einer Strombegrenzung 31 begrenzt wird und mittels eines Spannungsversorgungsteils 32 eine geeignete Kleinspannung für die Ansteuerschaltung 20 und gegebenenfalls weitere Einrichtungen bereitgestellt wird.

Die Heizkordel der Heizvorrichtung 10 ist in an sich üblicher Weise aufgebaut und weist vorzugsweise zwei koaxial oder nebeneinander verlaufende Heizleiter auf, die den Heizstrom zur Reduzierung eines elektromagnetischen Feldes in entgegengesetzter Richtung führen und mittels einer Isolation voneinander getrennt sind, die z.B. einen negativen Widerstandstemperaturgang (NTC-Widerstand) besitzt. Um den Isolationswiderstand zu erfassen, ist eine Isolationssensorvorrichtung 11 zumindest teilweise in dem Heizkreis 17 angeordnet. Der Heizkreis 17 teilt sich im Anschluss an die Heizvorrichtung 10 in einen das Steuerglied 12 aufweisenden Steuerzweig 17.1 und einen dazu parallel verlaufenden Parallelzweig 17.2 auf, in dem eine Sicherheitsschaltung 14 zum Abschalten des Heizgerätes angeordnet ist, wenn ein gefährlicher Zustand in der Heizvorrichtung 10, wie z.B. ein Kurzschluss, auftritt.

In dem Steuerzweig 17.1 ist ein weiteres Steuerglied 13 angeordnet, mit dem der Heizstrom iH in einem Fehlerfall begrenzt oder auch vollständig abgeschaltet werden kann, wobei dessen Ansteuerung ebenfalls über die Ansteuerschaltung 20 erfolgt. Die beiden Steuerglieder 12, 13 sind vorzugsweise als Halbleiter-Schaltglieder, beispielsweise Thyristoren oder Triacs oder Schalttransistoren ausgebildet. Wegen der näheren Ausbildung der lsolationssensorvorrichtung 11, der Steuerglieder 12, 13 mit Ansteuerung sowie der Sicherheitsabschaltung 14 wird auf die eingangs erwähnte Druckschrift DE 102 11 142 A1 verwiesen, in der eine geeignete Ausgestaltung im Einzelnen angegeben ist. Demgemäß ist zwischen den von dem Anschlusskabel abgelegenen Enden der Heizdrähte eine Diode angeordnet, mit der im Normalbetrieb eine Halbwelle des Heizstromes iH gesperrt wird. Fließt nun auch Strom einer negativen Halbwelle, bedeutet dies, dass die Diode über die Isolation überbrückt wird. Wegen des negativen Temperaturganges der Isolation hängt diese Stromkomponente von der Temperatur der Heizkordel ab, so dass über die Isolationssensorvorrichtung 11 auf die Temperatur der Heizkordel geschlossen werden kann, wobei insbesondere punktuelle Temperaturerhöhungen (Hotspot) z.B. durch einen scharfen Knick eine wesentliche Stromerhöhung in Sperrrichtung der Diode ergeben, die bei Kurzschluss der Heizleiter ein Maximum erreicht.

Bei einem Kurzschluss der Heizleiter spricht insbesondere auch die Sicherheitsabschaltung 14 an, die über eine den Kurzschlussstrom durchlassende weitere Diodenanordnung gespeist wird. Der Kurzschlussstrom führt zu einem starken Temperaturanstieg von in der Sicherheitsschaltung 14 vorhandenen Widerstandelementen, die in thermischem Kontakt mit einer Temperatursicherung stehen und diese auslösen und dadurch den Versorgungsstrom des Wärmegerätes unterbrechen.

Die Ansteuerschaltung 20 weist als wesentliche Komponenten eine Zeitsteuerschaltung 21 mit einer Anzeigevorrichtung 21.1 sowie eine mit dieser in Verbindung stehenden Leistungsstellerschaltung 25 auf, über den das Steuerglied 12 angesteuert wird. Weiterhin weist die Ansteuerschaltung 20 als wesentliche Komponente einen Leistungsstufenschalter 22 auf, über den ein Benutzer eine gewünschte Temperatur wählen kann. Ferner kann die Ansteuerschaltung 20 eine Gehäuseinnentemperaturüberwachung 23 für ein Schaltergehäuse und/oder eine Überwachungsschaltung in Form eines Watchdog oder einer redundanten Ansteuerschaltung für das weitere Steuerglied 13 umfassen. Die Ansteuerschaltung 20 kann teilweise durch einen Mikrocontroller oder Mikrorechner oder eine spezielle integrierte Schaltungsanordnung (ASIC-Lösungen) verwirklicht sein.

Die Zeitsteuerschaltung 21 hat mehrere Funktionen, die durch ein oder mehrere Programme in ihr ausgebildet sein können. Eine vorteilhafte Ausgestaltung besteht dabei darin, dass während einer vorgegebenen oder fest (von dem Anwender nicht änderbaren) vorgebbaren Anfangszeitdauer von vorzugsweise zwischen 30 und 120 Minuten, z.B. 60 oder 90 Minuten zunächst eine gegenüber einer gewählten Temperaturstufe deutlich erhöhte Heizleistung über den an die Zeitsteuerschaltung 21 angeschlossenen Leistungssteller und das Steuerglied 12 erzeugt wird, wobei in einer Anfangsphase der Anfangszeitdauer Δta ein steiler Anstieg der Oberflächentemperatur des Heizkörpers bzw. Trägers bis auf ein gewisses Niveau erfolgt, bei dem Sicherheitsbestimmungen jedenfalls noch zuverlässig eingehalten sind. Sodann bleibt die Heizleistung durch entsprechende Steuerung oder Einregelung des Heizstroms iH für eine vorgegebene Zeitdauer auf diesem Niveau oder wird langsam abgesenkt. Gegen Ende der Anfangszeitdauer wird dann die Heizleistung bzw. der Heizstrom iH so gesteuert oder geregelt, dass eine über eine längere nachfolgende Dauerbetriebsphase mit nicht fest vorgegebenem Ende, das vom Benutzer oder ebenfalls mittels Zeitsteuerung wählbar ist, zugelassene Temperatur an der Oberfläche des Trägers von z.B. 50° C oder 60° C nicht überschritten wird, um den sicheren Betrieb der Heizvorrichtung 10 auch unter unbeaufsichtigten Bedingungen (z.B. beim Schlafen) zu gewährleisten und gesundheitliche Gefährdungen auch eines empfindlichen Benutzers sicher auszuschließen.

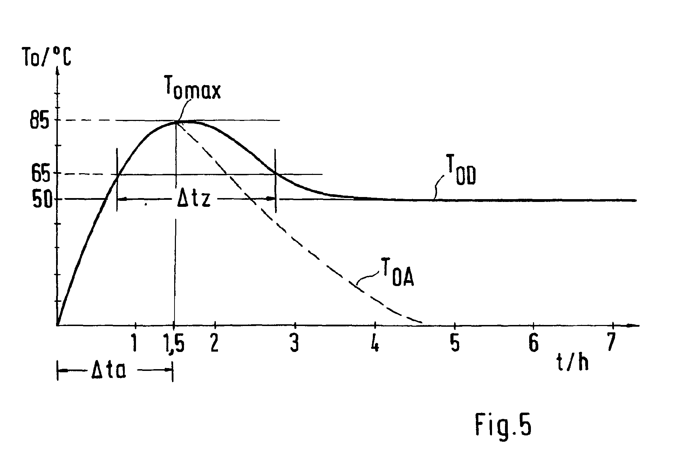

Ein Beispiel für einen mit den vorstehenden Maßnahmen gesteuerten oder geregelten Temperaturverlauf an der Oberfläche des Trägers ist in Fig. 5 gezeigt. Eine maximale Oberflächentemperatur Tₒₘₐₓ (vorliegend 85°), die in keinem Falle überschritten werden darf, wird z.B. nach 90 Min. oder vorher erreicht. Anschließend erfolgt eine Temperaturabsenkung entsprechend einem bestimmten Sollwert auf eine für einen Dauerbetrieb (über mehrere Stunden) zulässige Temperatur T_{OD} (von z.B. 50° C), die auch bei einem unbeaufsichtigten Betrieb (z.B. beim Schlafen) zulässig ist. Eine zwischenzeitliche Temperatur T_{z} (von z.B. 65° C), die zwischen der maximalen Oberflächentemperatur Tₒₘₐₓ und der zulässigen Dauerbetriebs-Temperatur T_{OD} liegt, wird höchstens während einer Dauer Δtz (z.B. 2 Stunden) überschritten.

Alternativ kann die Steuerung oder Regelung der Heizleistung über den Heizstrom iH auch so erfolgen, dass nach dem gewünschten Verlauf der Temperatur während der Anfangszeitdauer Δta eine vollständige Abschaltung erfolgt, wobei die Temperatur entsprechend dem Verlauf T_{OA} zurückgeht. Eine solche Wahlmöglichkeit kann beispielsweise in dem Leistungsstufenschalter 22 oder einer entsprechenden Bedieneinheit vorgesehen sein.

Ferner kann auch eine Intervall-Leistungssteuerung bzw. -regelung für vorgegebene Wärmeprogramme z.B. für eine therapeutische Behandlung mit Beachtung eines maximalen Temperaturgrenzwertes nach z.B. 60 oder 90 Minuten vorgesehen sein.

Der Verlauf der Leistungssteuerung bzw. -regelung und der damit an der Oberfläche des Trägers bewirkten Temperatur richtet sich dabei nach einer gewählten Temperaturstufe und ist vorzugsweise auch in Abhängigkeit von einer Umstellung einer Temperaturstufe, beispielsweise in Abhängigkeit von der Zeitdauer seit dem Einschalten und/oder der gewählten neuen Temperaturstufe relativ zu der vorhergehenden geeignet steuerbar. Auch kann in der Bedieneinheit bzw. dem Leistungsstufenschalter 22 eine Betriebsartvorgabemöglichkeit vorgesehen sein, wie z.B. eine intervallartige Wärmebehandlung für die therapeutische Behandlung oder ein Schlafmodus.

Die Leistungsstufenabsenkung kann kontinuierlich oder in Stufen nach einem vorgegebenen Programmablauf erfolgen.

Um eine Abschaltung nach z.B. 60 oder 90 Minuten zu bewirken, ist es denkbar, ein Ausgangssignal der Zeitsteuerschaltung 21 auf die Leistungsstellerschaltung 25, die Überwachungsschaltung 24, den Netzschalter 30, die Gehäuseinnentemperaturüberwachung 23 oder die Isolationssensorvorrichtung 11 gegebenenfalls mit einer in der Ansteuerschaltung 20 vorgesehenen Isolationsüberwachungsstufe 11.1 oder auf Kombinationen dieser Komponenten wirken zu lassen. Dabei kann das Steuerglied 12 und/oder das weitere Steuerglied 13 angesprochen werden. Auch ist es möglich, über eine oder mehrere dieser Komponenten eine Begrenzung oder Herabsetzung der Heizleistung vorzunehmen.

Die verschiedenen Verläufe können beispielsweise in Form von Verlaufskurven bzw. Tabellen in einem Speicher abgelegt sein, wobei sie entsprechend der Temperaturwahl über den Leistungsstufenumschalter 22 bzw. die Bedieneinheit automatisch ausgewählt werden. Insbesondere ist auf diese Weise auch sicher gewährleistet, dass vorgegebene oder vorgebbare Grenzwerte entsprechend anerkannten Sicherheitskriterien eingehalten werden. Die Betriebszustände der Zeitsteuerschaltung 21 oder auch weitere Betriebszustände des Wärmegerätes können auf der Anzeigevorrichtung 21.1 für den Benutzer nachvollziehbar dargestellt werden. Auch die Wahl der Temperaturstufen oder einer Betriebsart ist auf diese Weise für den Benutzer darstellbar.

Wie aus Fig. 1 weiter ersichtlich, steht die Zeitsteuerschaltung 21 mit dem Versorgungsteil 32 in bidirektionaler Verbindung, um gegebenenfalls auch eine Abschaltung derselben vornehmen zu können. Die Zeitsteuerschaltung 21 ist ferner mit dem Leistungsstufenumschalter 22 bidirektional verbunden, so dass sie die Temperaturwahl feststellen und andererseits z.B. auch eine Abschaltung des Leistungsstufenumschalters bewirken kann. Ferner können Ausgangssignale der Zeitsteuerschaltung 21 auch über die Gehäuseinnentemperaturüberwachung 23 und die Überwachungsschaltung 24 auf das weitere Steuerglied 13 zum Begrenzen, Herabsetzen oder Abschalten der Heizleistung wirken. Umgekehrt ist es auch denkbar, dass die Gehäuseinnentemperaturüberwachung 23 und die Überwachungsschaltung 24 mit zugehörigen Steuersignalen auf die Zeitsteuerschaltung 21 wirken, die dann ihrerseits mit einem entsprechenden Ausgangssignal auf das Steuerglied 12 oder das weitere Steuerglied 13 zum Begrenzen, Herabsetzen oder Abschalten der Heizleistung einwirkt.

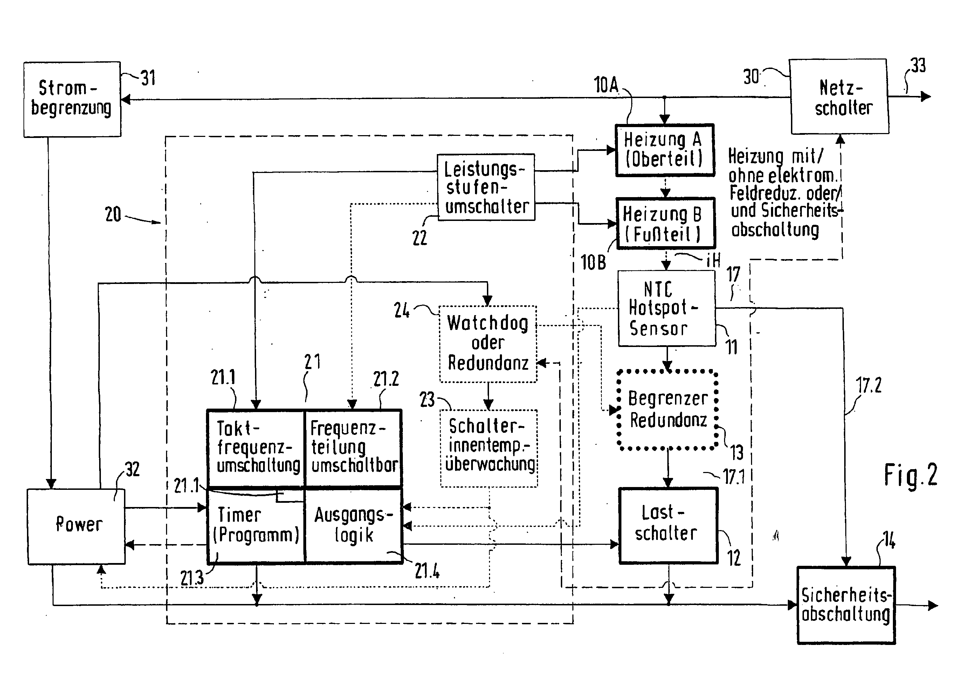

Ein weiteres Ausführungsbeispiel des elektrischen Wärmegerätes ist in Fig. 2 dargestellt. Die mit entsprechenden Bezugszeichen wie in Fig. 1 gezeigten Komponenten besitzen entsprechende Wirkungsweisen, so dass insoweit auf die vorstehenden Ausführungen verwiesen wird. Bei dem Ausführungsbeispiel nach Fig. 2 sind in dem schmiegsamen Träger beispielsweise zwei getrennt ansteuerbare Helzkordeln eingebracht, so dass sich eine erste und eine weitere Heizvorrichtung 10A, 10B ergeben. Die beiden Heizvorrichtungen sind vorzugsweise über jeweilige Heizkreise 17 entsprechend dem vorhergehenden Ausführungsbeispiel steuerbar, wobei Teile des Heizkreises 17 den beiden Heizvorrichtungen 10A, 10B auch gemeinsam zugehören können. Die Ansteuerschaltung 20 weist entsprechend einen Leistungsstufenschalter 22 bzw. eine Bedieneinheit auf, mit der beide Heizvorrichtungen 10A, 10B hinsichtlich der Temperaturwahl getrennt anwählbar sind. Entsprechend können mittels der Zeitsteuerschaltung 21 auch verschiedene Verläufe für die beiden Heizvorrichtungen 10A, 10B getrennt vorgegeben werden. Auch diese Ansteuerschaltung 20 weist z.B. eine Überwachungsschaltung mit einer Watchdog-Schaltung oder einer redundanten Steuerschaltung für das weitere Steuerglied 13 sowie auch eine Gehäuseinnentemperaturüberwachung 23 auf, die mit der Zeitsteuerschaltung 21 in entsprechender Weise verbunden sein können, wie zu dem vorherigen Ausführungsbeispiel ausgeführt.

Die Zeitsteuerschaltung 21 beinhaltet eine Taktfrequenzumschaltung 21.1, eine umschattbare Frequenzteilung 21.2 sowie eine Ausgangslogik, die verschiedenartige Ausgangssignale zum Ansteuern des Lastschalters 12 ermöglicht, so dass hierbei eine separate Leistungsstellerschaltung 25 nicht erforderlich ist.

Über die Taktfrequenzumschaltung 21.1 oder Umschaltung der Frequenzteilung 21.2 kann bei Umstellung der Leistungsstufen über den Leistungsstufenschalter 22 auf einfache Weise eine Änderung der Zeitsteuerung durch die Zeitsteuerschaltung 21 vorgegeben werden, wobei auch eine kombinierte Ausnutzung der Taktfrequenzumschaltung 21.1 und der Frequenzteilung 21.2 vorgesehen sein kann. Die Leistungsumschaltung kann hierbei durch eine mechanische Leistungsumschaltung realisiert sein, die direkt auf die Zeitsteuerschaltung 21 einwirkt. Der Benutzer stellt über den Leistungsstufenschalter 22 in Verbindung mit der Heizvorrichtung 10A, 10B die Temperaturstufe ein. Gleichzeitig wird z.B. die Taktfrequenzumschaltung 21.1 und/oder die Frequenzteilung 21.2 aktiviert, um auf die Zeitsteuerung Einfluss zu nehmen.

Da der Zeitsteuerschaltung 21 Signale von der Gehäuseinnentemperaturüberwachung 23, der Überwachungsschaltung 24 und/oder der Isolationssensorvorrichtung 11, und zwar über die Ausgangslogik 21.4 zugeführt werden, kann diese beim Überschreiten z.B. der Gehäuseinnentemperatur oder der Heizkordeltemperatur den unzulässigen Zustand erkennen und unterbricht mittels des Steuergliedes 12 den Heizstrom iH oder setzt diesen auf ein wirksames Maß herab. Auch hierbei kann mittels der Anzeigevorrichtung 21.1 der Zeitsteuerschaltung 21 dem Benutzer eine entsprechende Zustandsinformation vermittelt werden.

Denkbar ist dabei auch, wie auch bei dem vorherigen Ausführungsbeispiel, eine akustische Ausgabe, um z.B. ein Warnsignal abzugeben.

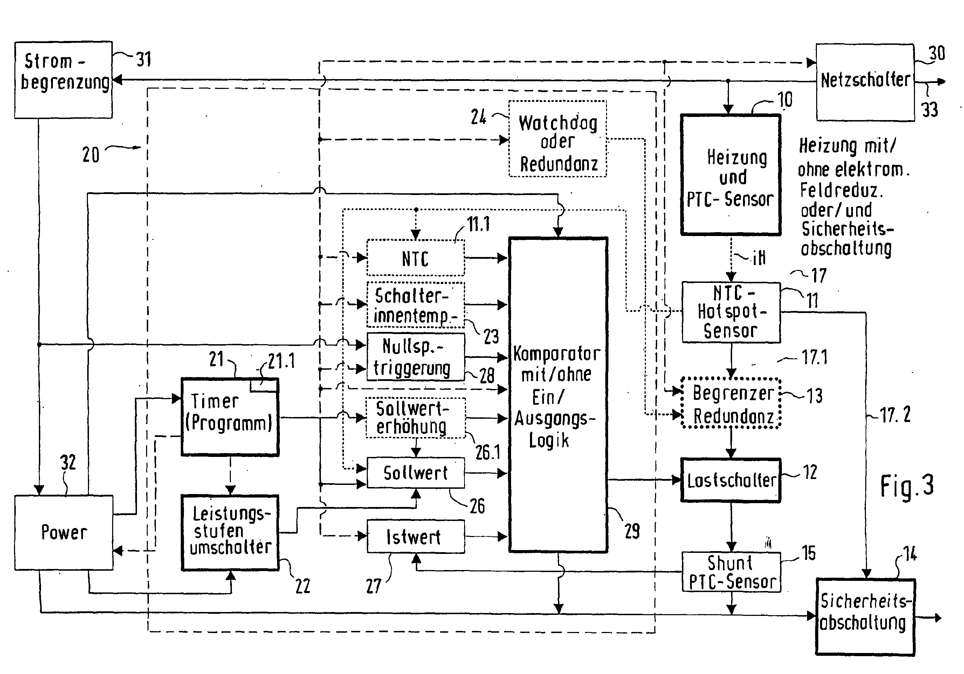

Auch bei dem Ausführungsbeispiel nach Fig. 3 sind die dem Ausführungsbeispiel nach Fig. 1 entsprechenden Komponenten mit gleichen Bezugszeichen bezeichnet. Zu ihrer Funktion und Wirkungsweise wird wiederum auf das Ausführungsbeispiel nach Fig. 1 und auch das Ausführungsbeispiel nach Fig. 2 verwiesen. Bei dem Ausführungsbeispiel nach Fig. 3 wird eine Temperaturregelung dadurch vorgenommen, dass in dem Heizkreis 17, und zwar dem Steuerzweig 17.1 über eine Messschaltung, beispielsweise einen Messwiderstand 15 ein Istwert abgegriffen und über eine Istwertschaltung 27 einem Eingang eines Komparators, der in einer Steuerstufe 29 ausgebildet ist, zugeführt wird. Einem weiteren Eingang des Komparators wird ein insbesondere von dem Leistungsstufenumschalter 22 bereitgestellter primärer Sollwert zugeführt, um über einen Soll-/Istwertvergleich und entsprechende Ansteuerschaltung mit Leistungssteller das Steuerglied 12 zum Regeln der Temperatur durch Beeinflussen des Heizstromes iH anzusteuern. Weiterhin werden der Steuerstufe 29, die beispielsweise als Mikrocontroller ausgebildet ist, Signale der Isolationssensorvorrichtung 11 über die Isolationsüberwachungsstufe 11.1, der Gehäuseinnentemperaturüberwachung 23 und/oder der Überwachungsschaltung 24 zugeführt, wobei vorliegend die Überwachungsschaltung 24 jedoch unmittelbar mit einem Ausgang an das weitere Steuerglied 13 angeschlossen ist.

Die Zeitsteuerschaltung 21 kann nun über entsprechende Ausgangssignale insbesondere den Sollwert über die Sollwertschaltung 26 und über eine Sollwertbeaufschlagung 26.1 beeinflussen, um in Abhängigkeit von der Zeitdauer die Heizleistung bzw. den Heizstrom iH über die Steuerstufe 29 insbesondere in der im Zusammenhang mit dem ersten Ausführungsbeispiel erläuterten Weise zu beeinflussen. Ferner werden von der Zeitsteuerschaltung 21 auch die lsolationsüberwachungsstufe 11.1, die Gehäuseinnentemperaturüberwachung 23, eine Nullspannungstriggerung 28 zum Gewährleisten definierter Ansteuerungszeitpunkte sowie die Überwachungsschaltung 24 und auch der Netzschalter 30 angesteuert, wobei diese Ansteuermöglichkeiten auch nur zum Teil ausgebildet sein können. Mit diesen Maßnahmen werden vielfältige Eingriffsmöglichkeiten in die Regelung der Temperatur ermöglicht. Der Benutzer stellt auch hierbei über den Leistungsstufenschalter 22 bzw. eine entsprechende Bedieneinheit die gewünschte Temperatur oder aber Betriebsart ein, womit er die Solltemperatur oder einen Soll-Temperaturverlauf vorgibt. Mit der Zeitsteuerschaltung 21 kann durch Einwirken auf den Netzschalter 30 erforderlichenfalls die Spannungsversorgung abgeschaltet werden. Auch über zumindest teilweises Ansteuern der übrigen Komponenten können die in Verbindung mit dem ersten Ausführungsbeispiel beschriebenen Verläufe gesteuert bzw. eingeregelt werden und es kann eine Begrenzung, Herabsetzung oder Abschaltung des Heizstromes iH bewirkt werden.

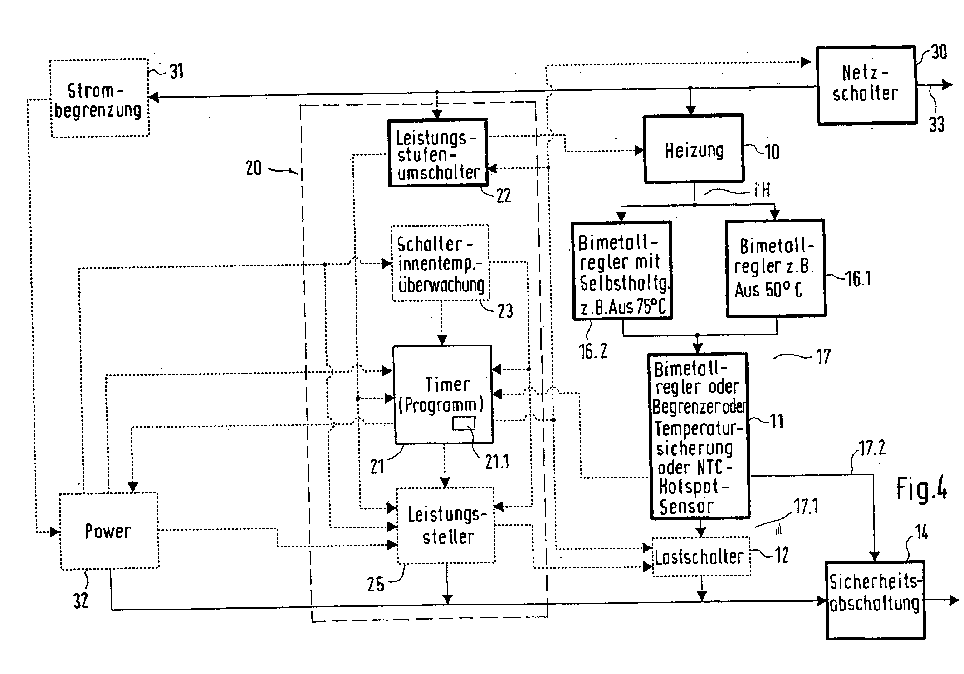

Bei dem in Fig. 4 gezeigten Ausführungsbeispiel, bei dem entsprechende Komponenten wie bei den vorhergehenden Ausführungsbeispielen wiederum mit gleichen Bezugszeichen versehen sind, sind in dem Heizkreis 17 im Anschluss an die Heizvorrichtung 10 zwei zueinander parallel geschaltete Bimetallregler 16.1, 16.2 angeordnet, denen wiederum eine Isolationssensorvorrichtung 11 oder stattdessen ein weiterer Bimetallregler oder Begrenzer oder eine Temperatursicherung nachgeschaltet ist. Anschließend zweigt der Heizkreis 17 wiederum in den Steuerzweig mit dem Steuerglied 12 und den Parallelzweig 17.2 mit der Sicherheitsabschaltung 14 auf. Die Zeitsteuerschaltung 21 ist eingangsseitig an den Versorgungsteil 32, den Leistungsstufenschalter 22, die Gehäuseinnentemperaturüberwachung 23 sowie die Isolationssensorvorrichtung 11 bzw. die diesen ersetzende Komponente angeschlossen. Ausgangsseitig wirkt die Zeitsteuerschaltung 21 auf die Leistungsstellerschaltung 25, den Versorgungsteil 32, den Netzschalter 30, das Steuerglied 12 und/oder den Leistungsstufenschalter 22 ein. Von dem Versorgungsteil 32 werden außerdem noch die Leistungsstellerschaltung 25 und die Gehäuseinnentemperaturüberwachung 23 versorgt. Mit der Zeitsteuerschaltung 21 sind entsprechende Verläufe, wie in Verbindung mit den vorangegangenen Ausführungsbeispielen beschrieben, zumindest teilweise steuerbar, wobei diese ebenfalls vorzugsweise in Programmen vorgegeben sind.

Die Regelung des Heizstromes iH über die beiden Bimetallregler 16.1, 16.2 geschieht in der Weise, dass anfänglich der Heizstrom iH durch beide Bimetallregler 16.1, 16.2 fließt, bis der erste Bimetallregler bei Überschreiten einer unteren Temperaturschwelle von z.B. 50° C abschaltet. Anschließend fließt der Heizstrom nur noch über den anderen Bimetallregler 16.2, bis eine durch diesen vorgegebene obere Temperaturschwelle von z.B. 75° C erreicht ist. Dann wird der Heizstrom iH vollständig unterbrochen. Da der andere Bimetallregler 16.2 mit Selbsthaltung ausgebildet ist und demnach in dem geöffneten Zustand verbleibt, beginnt der Heizstrom iH erst dann wieder zu fließen, wenn die untere Temperaturschwelle wieder unterschritten wird, so dass auf diese Temperatur nach der Anfangszeitdauer eingeregelt wird. Mittels des weiteren Bimetallreglers 11 oder des Steuerglieds 12 kann dann bis zu der unteren Temperaturgrenze die Temperatur weiter begrenzt, herabgesetzt oder auch abgeschaltet werden. Dabei wird die von dem Benutzer gewünschte Temperatur über den Leistungsstufenschalter 22 sowie über den mit der Zeitsteuerschaltung 21 bestimmten Verlauf eingestellt, wie in Verbindung mit den vorhergehenden Ausführungsbeispielen beschrieben. Auch hierbei kann beispielsweise eine Abschaltung des Heizstromes iH durch Ansteuern des Netzschalters 30 über ein Ausgangssignal der Zeitsteuerschaltung 21 erfolgen. Auch das Wärmegerät nach diesem Ausführungsbeispiel ergibt eine angepasste Temperaturnachführung entsprechend dem Wunsch eines Benutzers, wobei verschiedenartige Sicherheitskriterien sicher eingehalten werden.

Die Abschaltung über die beschriebenen Zeitsteuerschaltungen erfolgt insbesondere z.B. mittels einpoliger oder mehrpoliger Abschaltung, während die Abschaltung durch den Benutzer beispielsweise vom Netz in der üblichen Weise allpolig erfolgt.

## Patentansprüche

1. Schmiegsames elektrisches Wärmegerät mit einer einen schmiegsamen Träger und eine darin eingelegte Heizkordel aufweisenden Wärmevorrichtung (10), mindestens einem in zumindest einem Heizkreis (17) angeordneten Steuerglied (12) für einen Heizstrom (iH) und einer auf dieses wirkenden Ansteuerschaltung (20), wobei die Ansteuerschaltung (20) eine Zeitsteuerschaltung (21) aufweist, mittels deren zum Erzeugen einer erhöhten Anfangstemperatur an der Oberfläche des Trägers während einer vorgegebenen Anfangszeitdauer eine gegenüber einer nachfolgenden, durch einen Sollwert bestimmten Dauerbetriebsphase erhöhte Heizleistung steuerbar oder regelbar ist, während in der Dauerbetriebsphase eine Heizleistung zum Bewirken einer niedrigeren Oberflächentemperatur des Trägers als die Anfangstemperatur einregelbar ist oder nach der Anfangszeitdauer eine Abschaltung des Heizstroms (iH) erfolgt,
**dadurch gekennzeichnet,**
**dass** während der Anfangszeitdauer gemäß einem überhöhten Sollwert die erhöhte Anfangstemperatur an der Oberfläche des Trägers auf eine maximale Oberflächentemperatur (Tₒₘₐₓ) steuerbar oder regelbar ist, die oberhalb der für einen unbeaufsichtigten Betrieb in der Dauerbetriebsphase zugelassenen, entsprechend dem Sollwert niedrigeren Oberflächentemperatur (T_{OD}) des Trägers liegt und bei der Sicherheitsbestimmungen des Wärmegeräts und die Temperaturverträglichkeit des Benutzers eingehalten sind.

2. Wärmegerät nach Anspruch 1,
**dadurch gekennzeichnet,**
**dass** die Ansteuerschaltung (20) in der Weise ausgebildet ist, dass die Höhe und/oder Dauer der erhöhten Heizleistung während der Anfangszeitdauer Δta in Abhängigkeit von einer manuell für die Dauerbetriebsphase gewählten Heizleistung gesteuert oder geregelt wird.

3. Wärmegerät nach Anspruch 1 oder 2,
**dadurch gekennzeichnet,**
**dass** die Zeitsteuerschaltung (21) derart ausgebildet ist, dass sie mit einem Ausgangssignal auf eine in der Ansteuerschaltung (20) angeordnete Leistungsstellerschaltung (25) einwirkt, mit der das Steuerglied (12) ansteuerbar ist.

4. Wärmegerät nach Anspruch 3,
**dadurch gekennzeichnet,**
**dass** das Ausgangssignal der Zeitsteuerschaltung (21) über eine Sollwertbeaufschlagung (26.1) einem Sollwert überlagerbar ist.

5. Wärmegerät nach einem der vorhergehenden Ansprüche,
**dadurch gekennzeichnet,**
**dass** die Ansteuerschaltung (20) eine Isolationsüberwachungsstufe (11.1) für eine zwischen in der Heizkordel befindlichen Heizdrähten liegende Isolation, eine Gehäuseinnentemperaturüberwachungsstufe (23) oder eine Begrenzerstufe (24) oder eine Kombination mindestens zweier dieser Stufen aufweist und
**dass** die Ansteuerschaltung derart ausgebildet ist, dass sie unter Einfluss der Zeitsteuerschaltung (21) die bewirkte Höhe und/oder Dauer der erzeugten Heizleistung bei einem durch mindestens eine der Stufen festgestellten fehlerhaften Zustand begrenzt oder die Heizleistung vollständig abschaltet.

6. Wärmegerät nach Anspruch 5,
**dadurch gekennzeichnet,**
**dass** in dem Heizkreis (17) ein weiteres von der Ansteuerschaltung (20) ansteuerbares Steuerglied (13) angeordnet ist, das bei einem fehlerhaften Zustand zum Begrenzen, Herabsetzen oder Unterbinden des Heizstromes (iH) angesteuert wird.

7. Wärmegerät nach Anspruch 6,
**dadurch gekennzeichnet,**
**dass** zumindest ein Ausgangssignal der Stufen (11.1, 23, 24) zum Ansteuern des weiteren Steuergliedes (13) herangezogen ist.

8. Wärmegerät nach einem der Ansprüche 5 bis 7,
**dadurch gekennzeichnet,**
**dass** die Ansteuerschaltung (20) in der Weise ausgebildet ist, dass das oder ein weiteres Ausgangssignal der Zeitsteuerschaltung (21) mindestens einer Stufe (11.1, 23, 24) zugeführt wird,
**dass** die mindestens eine Stufe (11.1, 23, 24) in der Weise ausgebildet ist, dass sie wie bei einem anormalen Zustand auf das Steuerglied (12) und/oder das weitere Steuerglied (13) zum Begrenzen, Herabsetzen oder Unterbrechen des Heizstromes (iH) wirkt, oder
**dass** die Ansteuerschaltung (20) derart ausgestaltet ist, dass das oder das weitere Ausgangssignal unmittelbar an das weitere Steuerglied (13) zum Begrenzen, Herabsetzen oder Unterbrechen des Heizstromes (iH) angelegt wird.

9. Wärmegerät nach einem der Ansprüche 5 bis 7,
**dadurch gekennzeichnet,**
**dass** mindestens eine Stufe (11.1, 23, 24) mit einem Ausgang an einen Eingang der Zeitsteuerschaltung (21) angeschlossen ist und
**dass** die Zeitsteuerschaltung (21) so ausgebildet ist, dass sie auf einen Empfang eines Ausgangssignals der Stufe (11.1, 23, 24) ihrerseits ein Ausgangssignal zum Begrenzen, Herabsetzen oder Unterbrechen des Heizstromes (iH) abgibt.

10. Wärmegerät nach einem der vorhergehenden Ansprüche,
**dadurch gekennzeichnet,**
**dass** die Zeitsteuerschaltung (21) in elektrische Wirkverbindung mit einem Schalter (30) der Energieversorgung (33, 32) des Wärmegerätes, der Ansteuerschaltung (20) oder einer Komponente derselben oder unmittelbar mit dem weiteren Steuerglied (13) zum Abschalten der elektrischen Versorgungsspannung gebracht ist.

11. Wärmegerät nach einem der vorhergehenden Ansprüche,
**dadurch gekennzeichnet,**
**dass** Verläufe der Heizleistung zum Beeinflussen der Oberflächentemperatur hinsichtlich Höhe und/oder Dauer in Abhängigkeit von einer manuell gewählten Leistungsstufe oder Anwendungsbetriebsart in einem Speicher abgelegt und zum Steuern und Einregeln der Heizleistung aufrufbar sind.

12. Wärmegerät nach Anspruch 11,
**dadurch gekennzeichnet,**
**dass** in dem Speicher in Verbindung mit einer Leistungsstufenumschaltung während einer Betriebsphase weitere Verläufe gespeichert und auf die Umschaltung hin aufrufbar sind.

13. Wärmegerät nach einem der vorhergehenden Ansprüche,
**dadurch gekennzeichnet,**
**dass** die Zeitsteuerschaltung (21) mit einer Anzeigevorrichtung (21.1) für Zustände der Zeitsteuerschaltung und/oder Gerätefunktionen in Verbindung steht.

14. Wärmegerät nach einem der vorhergehenden Ansprüche,
**dadurch gekennzeichnet,**
**dass** in einem zu einem das mindestens eine Steuerglied (12) aufweisenden Steuerzweig (17.1) des Heizkreises (17) parallel liegenden Parallelzweig (17.2) eine übergeordnete Sicherheitsabschaltung (14) zum Abschalten des Wärmegerätes bei einem Gefährdungszustand vorgesehen ist.

15. Wärmegerät nach einem der vorhergehenden Ansprüche,
**dadurch gekennzeichnet,**
**dass** die Heizkordel in der Weise aufgebaut ist, dass bei Übertemperatur eine Sicherheitsabschaltung stattfindet.

## Claims

1. Flexible electrical heating unit with a heating device (10) with a flexible carrier and an embedded heating coil, with at least one control element (12) arranged in at least one heating circuit (17) for a heating current (iH) and a control circuit (20) acting on it, whereby the control circuit (20) has a time control circuit (21), with which an increased heating power can be achieved in order to achieve an increased initial temperature on the surface of the carrier compared to a subsequent continuous operating phase determined by a set point during a specified initial period of time, while in the continuous operating phase heating power to achieve a lower surface temperature of the carrier than the initial temperature can be controlled, or the heating current (iH) can be switched off after the initial heating period, **characterised in that** the increased initial temperature on the surface of the carrier is controllable to a maximum surface temperature (Tₒₘₐₓ) according to an increased set point, which is above the allowed set point for unattended operation in the continuous operation phase according to the lower set point of the surface temperature (T_{OD}) of the carrier, and complies with the safety regulations for the heating apparatus and the temperature tolerance of the user.

2. Heating unit according to claim 1, **characterised by** the control circuit (20) being designed in such a way that the magnitude and/or duration of the increased heating power during the initial time period Δta is controlled by a manually selected heating power for the continuous operation phase.

3. Heating unit according to claim 1 or 2, **characterised by** the time control circuit (21) being designed in such a way that its output signal acts on a power setting circuit (25) which is arranged in the control circuit (20), with which the control element (12) can be controlled.

4. Heating unit according to claim 3, **characterised by** it being possible to overlay the output signal of the time control circuit (21) by setting the set point (26.1).

5. Heating unit according to any one of the preceding claims, **characterised by** the control circuit (20) having an insulation monitoring step (11.1) for an insulation between the heating wires in the heating coil, a housing internal temperature monitoring step (23) or a limiting step (24) or a combination of at least two of these steps, and that the control circuit is designed such that it limits or completely switches off the magnitude and/or duration of the heating power in case of a fault condition detected by at least one of the steps under control of the time control circuit (21).

6. Heating unit according to claim 5, **characterised in that** an additional control element (13), controllable by the control circuit (20) is arranged in the heating circuit (17), which is controlled in case of a fault condition to limit, reduce or interrupt the heating current (iH).

7. Heating unit according to claim 6, **characterised by** at least one output signal of the Isteps (11.1, 23, 24) is used for the control of the additional control element (13).

8. Heating unit according to one of the claims 5 to 7, **characterised in that** the control circuit (20) is designed in such a way that the or another output signal of the time control circuit (21) is taken to at least one step (11.1, 23, 24), that at least one step (11.1, 23, 24) is designed in such a way that it acts on the control element (12) and/or the additional control element (13) under abnormal conditions to limit, decrease or interrupt the heating current (iH), or that the control circuit (20) is designed such that the or the additional output signal is applied directly to the additional control element (13) for the limitation, decrease or interruption of the heating current (iH).

9. Heating unit according to one of the claims 5 to 7, **characterised in that** at least one step (11.1, 23, 24) is connected with one output to one input of the time control circuit (21) and that the time control circuit (21) is designed in such a way that it outputs an output signal to limit, decrease or interrupt the heating current (iH) when receiving an output signal of the step (11.1, 23, 24).

10. Heating unit according to one of the preceding claims, **characterised in that** the time control circuit (21) is electrically connected to a switch (30), to disconnect the electrical power supply (33, 32) of the heating appliance, the control circuit (20) or one of the components thereof or directly the additional control element (13).

11. Heating unit according to one of the preceding claims, **characterised in that** profiles of heating power to influence the surface temperature regarding magnitude and/or duration, depending on a manually selected power level or operating mode, are saved in a memory and are available for controlling the heating power.

12. Heating unit according to claim 11, **characterised in that** by additional processes are saved in the memory in connection with a switch of power levels during an operational phase and are available for retrieval for switch-over.

13. Heating unit according to any one of the preceding claims, **characterised in that** the time control circuit (21) is in connection with a display device (21.1) for conditions of the time control circuit and/or device functioning.

14. Heating unit according to any one of the preceding claims, **characterised in that** provision is made for a higher level safety switch-off (14) to switch off the heating appliance in case of a hazardous condition in at least one of the parallel arranged parallel branches (17.2) of at least the one control element (12) of the control branch (17.1) of the heating circuit (17).

15. Heating unit according to any one of the preceding claims, **characterised in that** the heating coil is structured in such a way that safety switch-off will take place in case of overheating.

## Revendications

1. Appareil de chauffage électrique flexible comprenant un dispositif de chauffage (10) présentant un support flexible et un cordon chauffant logé dans celui-ci, au moins un organe de commande (12) disposé dans au moins un circuit de chauffage (17) pour un courant de chauffage (iH), et un circuit de commande (20) agissant sur celui-ci, le circuit de commande (20) présentant un circuit de commande temporisée (21) au moyen duquel, pendant une durée initiale prédéfinie, une puissance de chauffage plus élevée par rapport à une phase de fonctionnement permanent suivante déterminée par une valeur de consigne peut être commandée ou régulée pour générer une température initiale plus élevée à la surface du support, tandis que dans la phase de fonctionnement permanent une puissance de chauffage destinée à produire une température de surface du support plus basse que la température initiale est réglable ou une coupure du courant de chauffage (iH) est réalisée après la durée initiale,
**caractérisé en ce**
**que** pendant la durée initiale selon une valeur de consigne augmentée, la température initiale plus élevée à la surface du support peut être commandée ou régulée à une température de surface maximale (Tₒₘₐₓ) qui se situe au-dessus de la température de surface (T_{OD}) du support plus basse, admissible pour un fonctionnement sans surveillance dans la phase de fonctionnement permanent, correspondant à la valeur de consigne et à laquelle les normes de sécurité de l'appareil de chauffage et la tolérance à la température de l'utilisateur sont respectées.

2. Appareil de chauffage selon la revendication 1,
**caractérisé en ce**
**que** le circuit de commande (20) est conçu de manière que la hauteur et/ou la durée de la puissance de chauffage augmentée pendant la durée initiale Δta soit commandée ou régulée en fonction d'une puissance de chauffage choisie manuellement pour la phase de fonctionnement permanent.

3. Appareil de chauffage selon la revendication 1 ou 2,
**caractérisé en ce**
**que** le circuit de commande temporisée (21) est conçu de manière à pouvoir agir par un signal de sortie sur un circuit de réglage de puissance (25) disposé dans le circuit de commande (20), par lequel l'organe de commande (12) peut être commandé.

4. Appareil de chauffage selon la revendication 3,
**caractérisé en ce**
**que** le signal de sortie du circuit de commande temporisée (21) peut être superposé à une valeur de consigne au moyen d'une application de valeur de consigne (26.1).

5. Appareil de chauffage selon une des revendications précédentes,
**caractérisé en ce**
**que** le circuit de commande (20) présente un étage de surveillance d'isolation (11.1) pour une isolation située entre des fils chauffants se trouvant dans le cordon chauffant, un étage de surveillance de température intérieure de boîtier (23) ou un étage limiteur (24) ou une combinaison d'au moins deux de ces étages, et
**que** le circuit de commande est conçu de manière à limiter, sous l'influence du circuit de commande temporisée (21), la hauteur et/ou la durée produite de la puissance de chauffage générée dans le cas d'un état défectueux constaté par au moins un des étages ou à couper complètement la puissance de chauffage.

6. Appareil de chauffage selon la revendication 5,
**caractérisé en ce**
**qu'**un autre organe de commande (13) pouvant être commandé par le circuit de commande (20) est disposé dans le circuit de chauffage (17), lequel est commandé pour limiter, diminuer ou interrompre le courant de chauffage (iH) dans le cas d'un état défectueux.

7. Appareil de chauffage selon la revendication 6,
**caractérisé en ce**
**qu'**au moins un signal de sortie des étages (11.1, 23, 24) est utilisé pour commander l'autre organe de commande (13).

8. Appareil de chauffage selon une des revendications 5 à 7,
**caractérisé en ce**
**que** le circuit de commande (20) est conçu de manière que le ou un autre signal de sortie du circuit de commande temporisée (21) soit amené à au moins un étage (11.1, 23, 24),
**que** ledit au moins un étage (11.1, 23, 24) est conçu de manière à agir pour limiter, diminuer ou interrompre le courant de chauffage (iH) dans le cas d'un état anormal sur l'organe de commande (12) et/ou l'autre organe de commande (13), ou que le circuit de commande (20) est conçu de manière que le ou l'autre signal de sortie soit appliqué directement à l'autre organe de commande (13) pour limiter, diminuer ou interrompre le courant de chauffage (iH).

9. Appareil de chauffage selon une des revendications 5 à 7,
**caractérisé en ce**
**qu'**au moins un étage (11.1, 23, 24) est connecté par une sortie à une entrée du circuit de commande temporisée (21) et
**que** le circuit de commande temporisée (21) est conçu de manière qu'en cas de réception d'un signal de sortie de l'étage (11.1, 23, 24), il délivre lui-même un signal de sortie pour limiter, diminuer ou interrompre le courant de chauffage (iH).

10. Appareil de chauffage selon une des revendications précédentes,
**caractérisé en ce**
**que** le circuit de commande temporisée (21) est mis en liaison électrique active avec un interrupteur (30) de l'alimentation en énergie (33, 32) de l'appareil de chauffage, avec le circuit de commande (20) ou un composant de celui-ci ou directement avec l'autre organe de commande (13) pour couper la tension d'alimentation électrique.

11. Appareil de chauffage selon une des revendications précédentes,
**caractérisé en ce**
**que** des courbes de la puissance de chauffage pour influencer la température de surface en ce qui concerne la hauteur et/ou la durée en fonction d'un niveau de puissance ou d'un mode d'utilisation choisi manuellement sont stockées dans une mémoire et peuvent être appelées pour commander et réguler la puissance de chauffage.

12. Appareil de chauffage selon la revendication 11,
**caractérisé en ce**
**que** d'autres courbes en relation avec une commutation de niveau de puissance pendant une phase de fonctionnement sont enregistrées dans la mémoire et peuvent être appelées suite à la commutation.

13. Appareil de chauffage selon une des revendications précédentes,
**caractérisé en ce**
**que** le circuit de commande temporisée (21) est relié à un dispositif d'affichage (21.1) des états du circuit de commande temporisée et/ou des fonctions de l'appareil.

14. Appareil de chauffage selon une des revendications précédentes,
**caractérisé en ce**
**qu'**un arrêt de sécurité prioritaire (14) destiné à couper l'appareil de chauffage dans le cas d'un état dangereux est prévu dans une branche parallèle (17.2) placée en parallèle avec la branche de commande (17.1) du circuit de chauffage (17) qui contient ledit au moins un organe de commande (12).

15. Appareil de chauffage selon une des revendications précédentes,
**caractérisé en ce**
**que** le cordon chauffant est conçu de manière à ce qu'un arrêt de sécurité ait lieu en cas de surtempérature.
